# EUROPEAN PATENT SPECIFICATION

(11) **EP 2 485 388 B1**
(45) Date of publication and mention of the grant of the patent: **29.05.2013**
(21) Application number: 11153348.5
(22) Date of filing: 04.02.2011
(51) Int. Cl.: H02P 9/10, H02P 9/48, H02P 21/00, H02P 21/06, H02P 29/00

(54) **Reduction of noise and vibrations of an electromechanical transducer by using a modified stator coil drive signal comprising harmonic components**
Rausch- und Schwingungsverringerung in einem elektromechanischen Wandler durch die Verwendung eines modifizierten Statorspulen-Antriebssignals mit harmonischen Komponenten
Réduction du bruit et des vibrations d'un transducteur électromécanique en utilisant un signal modifié d'entraînement de bobine de station comprenant des composantes harmoniques

(43) Date of publication of application: 08.08.2012
(73) Proprietor: Siemens Aktiengesellschaft, 80333 München (DE)
(72) Inventor: Heng, Deng, 7330, Brande (DK); Groendahl, Erik, 8653, Them (DK)

(56) References cited:
- EP-A1- 1 737 118
- EP-A2- 1 211 798
- EP-A2- 1 467 478
- EP-A2- 2 043 255
- US-A1- 2009 251 096
- US-A1- 2009 267 555

## Description

### Field of invention

The present invention relates to the technical field of operating an electromechanical transducer having a stator and a rotor. In particular, the present invention relates to a method for controlling the operation of such an electromechanical transducer, which in particular is electric generator for a wind turbine. Further, the present invention relates to a corresponding control system and to a computer program for controlling the operation of an electromechanical transducer.

### Art Background

Electromechanical transducers are machines, which convert electrical energy into mechanical energy or vice versa. An electric motor is a widely used electromechanical transducer that converts electrical energy into mechanical energy using magnetic field linkage. An electric generator is an electromechanical transducer that converts mechanical energy into electrical energy also using a magnetic field linkage.

An electromechanical transducer comprises a stator and a rotor. The stator is an assembly, which represents the stationary part of an electromechanical transducer. The rotor is an assembly, which represents the moving and in particular the rotating part of an electromechanical transducer.

In order to realize a magnetic field linkage permanent magnets may be used in particular for a rotor of an electromechanical transducer. In recent years, especially since the introduction of rare-earth magnetic materials, permanent magnet (PM) electromechanical transducers have become popular since they eliminate the need for commutators and brushes, which are commonly used with conventional Direct Current (DC) electromechanical transducer. The absence of an external electrical rotor excitation eliminates losses on the rotor and makes permanent magnet electromechanical transducers more efficient. Further, the brushless design of a PM electromechanical transducer allows conductor coils to be located exclusively in the stationary stator. In this respect it is mentioned that non-PM electromechanical transducers, which are equipped with commutators and brushes, are typically susceptible to significantly higher maintenance costs.

PM electromechanical transducers are also known for their durability, controllability and absence of electrical sparking. Thanks to these advantages PM electromechanical transducers are widely used in many applications such as electric vehicles (electromechanical transducer is a motor) or in power generation systems (electromechanical transducer is a generator) such as for instance a wind turbine.

One technical problem of PM electromechanical transducers is cogging torque. Cogging torque is produced between the rotor and the stator due to a spatial meeting of "sharp edges" of rotor mounted permanent magnets and stator coils when the PM electromechanical transducer is in operation. In a PM electric generator cogging torque is an undesired effect that contributes to a so called "torque ripple" on the electric power output signal of the generator. Another problem of PM transducers is the mechanical "radial force/pressure ripple". Both effects lead to unwanted vibrations of the PM electric generator, which itself causes troublesome acoustic noise. This holds in particular for PM electric generators, which in particular in wind turbine applications are operated with variable rotational speed. Avoiding or at least reducing acoustic noise and vibrations is a great challenge in the design and/or the operational control of PM electric generators being used for wind turbines.

One approach to reduce acoustic noise and vibrations is to choose an appropriate design for a PM electric generator. For example, torque ripple can be reduced by using an appropriate shaping of magnets. Further, a skewing of the rotor magnets has been proposed (e.g. US 6,867,524 B2). However, it is difficult to minimize both torque ripple and radial force/pressure ripple by using a single design for a PM electromechanical transducer.

Another approach to reduce noise and vibration within a PM electromechanical transducer is to design mechanical parts of the transducer in such a manner that all resonance frequencies, which can be excited by torque and radial force/pressure ripple, are out of the frequency range. However, in case of a variable rotational speed of the PM electromechanical transducer, the frequency range that can be excited by torque ripple and/or radial force/pressure ripple is very wide. Therefore, it is very difficult to avoid vibrations within the whole frequency range of the PM electromechanical transducer.

Methods and systems for reducing torque ripple in electric machines are known from documents: EP2043255, US2009/251096, US2009/267555, EP1467478, EP1211798 and EP1737118.

There may be a need for reducing unwanted vibrations of an electromechanical transducer comprising a rotor being equipped with permanent magnets.

### Summary of the Invention

This need may be met by the subject matter according to the independent claims. Advantageous embodiments of the present invention are described by the dependent claims.

According to a first aspect of the invention there is provided a method for controlling the operation of an electromechanical transducer, in particular an electric generator for a wind turbine. The provided method comprises (a) determining a harmonic control signal being indicative for a harmonic operational behavior of the electromechanical transducer, wherein the harmonic operational behavior is given by electric and/or mechanic oscillations having frequency components being different from a fundamental frequency, which is assigned to a fundamental operational behavior of the electromechanical transducer, wherein determining the harmonic control signal comprises observing at least one value of operational parameters of the electromechanical transducer and deriving from a database the harmonic control signal as a function of the observed values of the operational parameters of the electromechanical transducer, wherein the operational parameters comprise a power being actually generated by the electromechanical tranducer or being actually consumed by the electromechanical tranducer, (b) generating a modified drive signal based on the determined harmonic control signal, and (c) supplying the generated modified drive signal to electromagnetic coils of a stator of the electromechanical transducer.

The described control method is based on the idea that acoustic noise and vibrations of and/or within the electromechanical transducer can be reduced by applying a control procedure that is capable of minimizing directly the excitation source of the unwanted harmonic operational behavior. According to the described method this is realized by means of a modified drive signal for energizing the stator coils in such a manner that the excitation source of the harmonic operational behavior can be at least partially eliminated. In order to achieve this, the modified drive signal may in particular comprise an alternating current (AC) component.

In this document the term "electromechanical transducer" may denote any machine which is capable of converting mechanical (in particular rotational) energy into electric energy or vice versa. Specifically, the electromechanical transducer may be an electric generator such as a wind turbine electric generator or an electric motor such as an electric drive of an electric vehicle.

The term "fundamental frequency" may particularly denote the frequency of any electric and/or mechanic oscillation of and/or within the electromechanical transducer which frequency is associated with a desired operation of the electromechanical transducer. In this respect the fundamental frequency may be in particular the rotational frequency of the rotor of the electromechanical transducer. Further, with respect to the electric behavior of the electromechanical transducer the fundamental frequency may be the frequency of the electric signal which (a) in case of a generator application is produced by the electromechanical transducer or (b) in case of a motor application is driving the electromechanical transducer. Typically, there is a fixed integer relationship between the "electric fundamental frequency" and the "mechanic fundamental frequency" of the electromechanical transducer. Of course, if the electromechanical transducer is the generator of a variable speed wind turbine, which is a preferred application area for control method described in this document, the fundamental frequency will vary over time.

The term "fundamental operational behavior" may particularly denote any mechanic and/or electric oscillation of or within the electromechanical transducer, which has a frequency corresponding to the above described fundamental frequency. Normally, the fundamental operational behavior of a wind turbine electric generator is to produce constant torque/power. But the electrical fundamental frequency is varying with rotor speed with range 8-18 Hz.

The "modified drive signal" may be any electric signal which is used for electrically energizing the stator coils of the electromechanical transducer. Depending on the specific electric circuitry for driving the stator coils the modified drive signal may be a voltage signal or a current signal.

Preferably, the modified drive signal may include modified voltage drive signals Vd and Vq for stator coils of the electromechanical transducer. In a controller controlling the described method these modified voltage drive signals Vd and Vq may be DC components in a d-q rotating frame. Physically, the electrical signal added to the stator coils is fundamental an AC signal in the a-b-c natural frame.

In this respect it is mentioned that unless other notified all voltage and current signals being used for the control method and the control system described in this document are signals in a synchronized rotating d-q reference frame.

According to an embodiment of the invention the harmonic operational behavior is based on (a) torque ripple oscillations and/or (b) radial force/pressure ripple oscillations. This may provide the advantage that with the described control method from a practical point of view the most relevant excitation sources for a harmonic operational behavior of an electromechanical transducer comprising a rotor with permanent magnets (PM) can be minimized.

Generally speaking, the harmonic control signal may be determinant for a harmonic current, which is injected to the stator coils of the electromechanical transducer and which is responsible for minimizing torque ripple oscillations and/or radial force/pressure ripple oscillation of the electromechanical transducer. Thereby, unwanted noise and vibrations cause by these oscillations can be reduced.

In particular in case of a wind turbine application the injection of the harmonic current to the stator coils may be accomplished by means of a frequency converter. This may provide the advantage that no additional hardware cost will be needed for realizing the described control method. Moreover, there is no need to change the already available hardware design. It is mentioned that the amount of harmonic current, which is typically needed for performing the described control procedure, is not very high, an additional electric loss of the electric generator is also small and ignorable.

In this respect it is mentioned that a frequency converter of a wind turbine is a commonly known electric power device, which is normally used for adapting the AC frequency and the voltage of the electric power signal provided by the electric generator of the wind turbine to the given AC frequency and the given voltage of the power grid. A frequency converter, which is sometimes also referred to as a power converter, typically includes a generator bridge, which in normal operation operates as an active rectifier in order to supply power to a direct current (DC) link. The generator bridge can have any suitable topology with a series of semiconductor power switching devices fully controlled and regulated using a pulse width modulation (PWM) strategy. A usual frequency converter typically includes also a network bridge, which converts this DC power from the DC link to an AC power, which in voltage, frequency and phase angle is matched to the power grid.

According to a further embodiment of the invention generating a modified drive signal comprises adding an AC drive signal being associated with the harmonic operational behavior of the electromechanical transducer to a DC drive signal being associated with the fundamental operational behavior of the electromechanical transducer.

This may mean that the mentioned modified drive signal is the sum of the AC drive signal and the DC drive signal. In this respect the DC drive signal can be understood as to represent the optimal drive signal for the stator coils in case of a complete absence of any harmonic operational behavior of the electromechanical transducer. Accordingly, the AC drive signal may be understood as a compensational portion of the modified drive signal, which compensational portion is configured such that the above mentioned sources of harmonic behavior at or within the electromechanical transducer will be eliminated at least partially.

According to a further embodiment of the invention the DC drive signal is generated by a DC controller, which is driven by a fundamental controller for controlling a fundamental drive signal for the electromagnetic coils of the stator, wherein the fundamental drive signal is associated exclusively with the fundamental operational behavior of the electromechanical transducer. Further, the AC drive signal is generated by an AC controller, which is operated as a function of the determined harmonic control signal being indicative for the harmonic operational behavior of the electromechanical transducer.

In this respect it is mentioned that the DC controller and the fundamental controller may be realized by means of two different control units or alternatively by means of a common control unit.

According to a further embodiment of the invention the AC drive signal is determined by (a) decomposing a current being actually generated by the electromechanical transducer(in case the electromechanical transducer is an electric generator) or being actually consumed by the electromechanical transducer (in case the electromechanical transducer is an electric motor) into different harmonic current components, (b) transforming each harmonic current component of the current from a rotating reference frame of the rotor of the electromechanical transducer into a harmonic voltage component of another reference frame, (c) regulating each transformed harmonic voltage component within the another reference frame, (d) transforming back each regulated harmonic voltage component from the another reference frame into the rotating reference frame, and (e) adding the various transformed back regulated harmonic voltage components.

The described decomposition of the actual current into the different harmonic current components can be realized for instance by means of appropriate band pass filters having a center frequency corresponding to the frequency of the respective harmonic current component. Accordingly, the harmonic current component may mean any component of the current which has a frequency being different from the above mentioned fundamental frequency.

With the described transformation of each harmonic current component, which is an AC signal, from the rotating reference frame (direct quadrature / d-q reference frame) into the another reference frame the AC signal can be transferred into a DC signal. This may provide the advantage that a regulation of this signal can be realized easier. The regulation can be realized by any type of controller such as for instance a proportional-integral (PI) controller, a proportional-derivative (PD) controller and/or a proportional-integral-derivative (PID) controller.

After having regulated each harmonic current component within the another reference frame the regulated harmonic current components are transformed back into the rotating reference frame. An addition of all these back transformed regulated harmonic current components may then yield the AC drive signal, which, as has been already described above, may be combined with the DC drive signal in order to yield the modified drive signal.

It is mentioned that optionally a limiting procedure can be accomplished with the output of an adding unit being used for adding the various transformed back regulated harmonic current components. This may provide the advantage that it will be ensured that the strength of the modified drive signal will be kept within technically meaningful limits and an unwanted oversteer of the electromechanical transducer can be avoided.

According to a further embodiment of the invention the AC drive signal is determined by (a) decomposing a current being actually generated by the electromechanical transducer (in case the electromechanical transducer is an electric generator) or being actually consumed by the electromechanical transducer into different harmonic current components, (b) converting each harmonic current component into a harmonic voltage component, (c) amplifying each converted harmonic current component, and (d) adding the various amplified converted harmonic voltage components. This may provide the advantage that an appropriate AC drive signal can be generated in an easy and effective manner.

Also in this embodiment optionally a limiting procedure can be accomplished with the output signal of an adding unit being used for adding the various amplified and regulated harmonic voltage components. As has already been mentioned above this may provide the advantage that it can be ensured that the strength of the modified drive signal will be kept within technically meaningful limits and an unwanted oversteer can be avoided.

According to a further embodiment of the invention the modified drive signal is generated by a general control unit as a function of (a) the determined harmonic control signal and (b) a fundamental control signal being generated by a fundamental controller for controlling a fundamental drive signal for the electromagnetic coils of the stator, wherein the fundamental drive signal is associated exclusively with the fundamental operational behavior of the electromechanical transducer.

Preferably, the determined harmonic control signal and the fundamental control signal are simply added and a resulting total control signal is processed by the general control unit.

According to a further embodiment of the invention the modified drive signal is generated as a further function of a current being actually generated by the electromechanical transducer (in case the electromechanical transducer is an electric generator) or being actually consumed by the electromechanical transducer (in case the electromechanical transducer is an electric motor). This may provide the advantage that the modified drive signal can be generated with a high accuracy. As a consequence, the excitation source and in particular the above mentioned torque ripple oscillations and/or the above mentioned radial force/pressure ripple oscillations causing the unwanted harmonic operational behavior of the electromechanical transducer can eliminated to a large extend.

According to a further embodiment of the invention determining the harmonic control signal comprises (a) observing a strength of the harmonic operational behavior and (b) calculating the harmonic control signal in response to the observed strength of the harmonic operational behavior. This may provide the advantage that the harmonic control signal is generated by means of a closed loop control procedure, which uses observables being indicative for the actual harmonic operational behavior as an input. Since the closed loop control procedure includes a feedback between the harmonic control signal and the actual harmonic operational behavior a very accurate and with respect to a suppression of the harmonic operational behavior a very effective harmonic control signal can be generated.

According to a further embodiment of the invention observing the strength of the harmonic operational behavior comprises using at least one of a measurement value and an available system value of observables being indicative for torque ripple oscillations and/or for radial force/pressure ripple oscillations of the electromechanical transducer.

The observables may comprise the strength of the current being actually generated by the electromechanical transducer (in case the electromechanical transducer is an electric generator) or the current being actually consumed by the electromechanical transducer (in case the electromechanical transducer is an electric motor).

The observables may further comprise the actual voltages being applied to the electromagnetic coils of the stator.

Further, the observables may comprise an actual angle between a direct-quadrature (d-q) rotating reference frame of the rotor of the electromechanical transducer and another reference frame (e.g. of the stator of the electromechanical transducer). In this respect it is mentioned that a d-q transformation between the another reference frame of the stator and the rotating reference frame of the rotor is a common mathematical transformation being often used to simplify the analysis of three-phase electric circuits. In the case of balanced three-phase electric circuits, application of the d-q transformation reduces the three AC quantities to two DC quantities. As a consequence, simplified calculations can be carried out on these imaginary DC quantities before performing the inverse transform to recover the actual three-phase AC results.

It is mentioned that in accordance with another embodiment of the invention the strength of the harmonic operational behavior can also be determined by directly sensing the torque ripple oscillations and/or the radial force/pressure ripple oscillations of the electromechanical transducer. Alternatively or in combination, results of measurements of vibrations, noise and/or magnetic flux can be used for determining the strength of the harmonic operational behavior.

Preferably, the database comprises a lookup table, in which appropriate values for the harmonic control signal are stored for a variety of different operational parameters of the electromechanical transducer.

Using the described database for deriving the harmonic control signal may mean that the modified drive signal, which is supplied to the stator coils of the electromechanical transducer, is determined by means of an open loop or a feedfor-ward procedure. This may provide the advantage that an appropriate harmonic control signal can be determined based on the values of operational parameters of the electromechanical transducer, which parameters can be measured easily.

According to a further embodiment of the invention the operational parameters being observed comprise at least one (a) a frequency of an AC signal being actually generated by the electromechanical transducer (in case the electromechanical transducer is an electric generator) or being actually consumed by the electromechanical transducer (in case the electromechanical transducer is an electric motor), and (b) an actual rotational angle of the rotor of the electromechanical transducer. This may provide the advantage that with respect to an effective suppression of the harmonic operational behavior an appropriate harmonic control signal can be generated.

The output of the database may be (a) a reference amplitude for at least one harmonic amplitude of the actual current being produced or being consumed by the electromechanical transducer, and (b) a reference phase angle for at least one harmonic amplitude of the actual current being produced or being consumed by the electromechanical transducer.

According to a further embodiment of the invention the modified drive signal is generated as a function of electric design parameters of the electromechanical transducer.

Taking into account electric design parameters of the electromechanical transducer may provide the advantage that an appropriate harmonic control signal and/or an appropriate modified drive signal for effectively suppressing the harmonic operational behavior of the electromechanical transducer can be determined respectively can be generated in a very effective and easy manner.

The electric design parameters may be for instance the electric resistance and/or the inductance of the electromagnetic coils of the stator of the electromechanical transducer.

It is mentioned that the AC drive signal and/or the modified drive signal, which comprises as a component the AC drive signal, could also be generated by applying a so called iterative learning controller (ILC) and/or repetitive controller (RC). An ILC and/or RC has the capability to track periodical reference for the AC drive signal and/or for the modified drive signal without using an accurate model.

It is further mentioned that most of the above described processing steps and in particular the processing steps which yield for instance the harmonic control signal, the modified drive signal, the AC drive signal, the DC drive signal, the different harmonic current components, the regulated harmonic current component and the amplified regulated harmonic current components may be carried out within the above mentioned rotating reference frame of the rotor. As a consequence, all the steps given above may be carried out separately for both components (d-component and d-component) of the rotating frame.

According to a further aspect of the invention there is provided a control system for controlling the operation of an electromechanical transducer, in particular an electric generator for a wind turbine. The provided control system comprises (a) a determining unit for determining a harmonic control signal being indicative for a harmonic operational behavior of the electromechanical transducer, wherein the harmonic operational behavior is given by electric and/or mechanic oscillations having frequency components being different from a fundamental frequency, which is assigned to a fundamental operational behavior of the electromechanical transducer wherein determining the harmonic control signal comprises observing at least one value of operational parameters of the electromechanical transducer and deriving from a database the harmonic control signal as a function of the observed values of the operational parameters of the electromechanical transducer, wherein the operational parameters comprise a power being actually generated by the electromechanical tranducer or being actually consumed by the electromechanical tranducer, (b) a generating unit for generating a modified drive signal based on the determined harmonic control signal, and (c) a supplying unit for supplying the generated modified drive signal to electromagnetic coils of a stator of the electromechanical transducer.

Also the described control system is based on the idea that acoustic noise and vibrations of and/or within the electromechanical transducer can be reduced by applying a control procedure that is capable of minimizing directly the excitation source of the harmonic operational behavior.

According to a further aspect of the invention there is described a computer program for controlling the operation of an electromechanical transducer, in particular an electric generator for a wind turbine. The described computer program, when being executed by a data processor, is adapted for controlling and/or for carrying out any one of the above described control methods.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a fundamental controller for controlling (a) a fundamental dc link voltage of a frequency converter and for controlling (b) the generation of a fundamental drive signal for electromagnetic coils of a stator of an electric generator, wherein the fundamental DC drive signal is associated exclusively with the fundamental operational behavior of the electric generator.
- Figure 2: shows a control system comprising a DC current controller and AC current controllers operating in d-q reference frame for generating a modified drive signal for the stator coils of an electric generator, wherein the modified drive signal is configured for reducing an unwanted harmonic operational behavior of the electric generator.
- Figure 3: shows a control system comprising general current controllers operating in d-q reference frame for generating a modified drive signal for the stator coils of an electric generator, wherein the modified drive signal is configured for reducing an unwanted harmonic operational behavior of the electric generator.
- Figure 4: shows a control system comprising a DC current controller and AC current controllers for generating a modified drive signal for the stator coils of an electric generator.
- Figure 5: shows a control system comprising general current controllers for generating a modified drive signal for the stator coils of an electric generator.
- Figure 6: shows an AC current controller relying on design parameters of an electric generator for generating an AC drive signal for the stator coils of the electric generator.

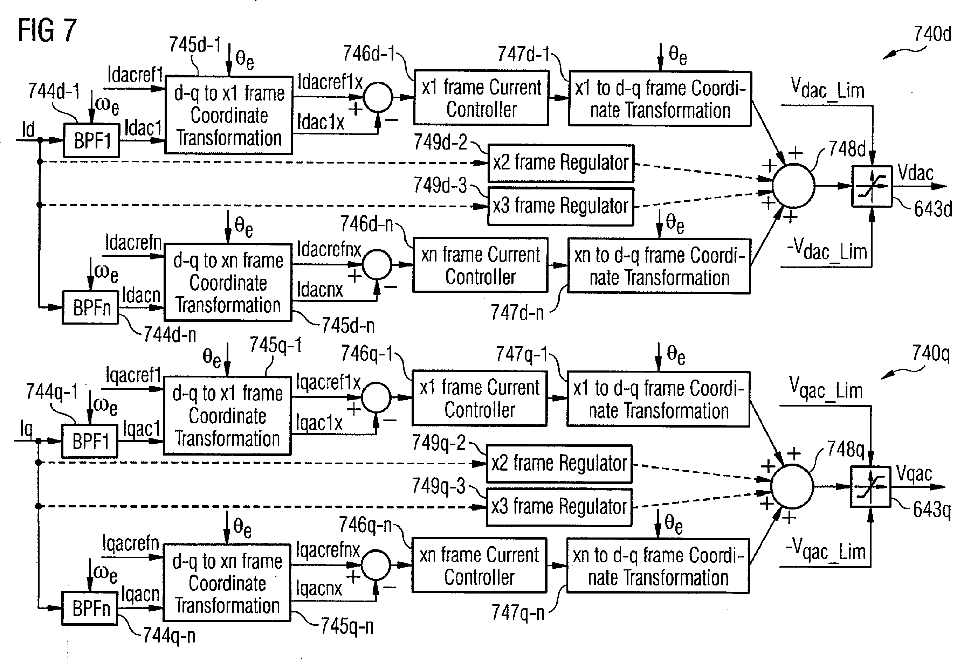

- Figure 7: shows another embodiment of an AC current controller relying on a decomposition of a current being actually generated by an electric generator into different harmonic current components, wherein a regulation of the harmonic current components being supposed to be injected into stator coils of the generator is accomplished (a) after a transformation of the harmonic current components from a rotating reference frame of the rotor of the generator into another reference frame of the stator of the generator and (b) before a back transformation from the another reference frame into the rotating reference frame.
- Figure 8: shows another embodiment of an AC current controller relying on a decomposition of a current being actually generated by an electric generator into different harmonic current components, wherein a regulation of the harmonic current components being supposed to be injected into stator coils of the generator is accomplished within the rotating reference frame of the rotor and an amplification of each regulated harmonic current component is carried out before adding the various amplified regulated harmonic current components.
- Figure 9: shows another embodiment of an AC current controller comprising an iterative learning controller (ILC) and/or a repetitive controller (RC) for generating an AC drive signal for the stator coils of an electric generator.
- Figure 10: shows general current controllers relying on design parameter of an electric generator for generating a modified drive signal for the stator coils of the electric generator.
- Figure 11: shows another embodiment of a general current controller comprising an iterative learning controller (ILC) and/or a repetitive controller (RC) for generating a modified drive signal for the stator coils of an electric generator.

### Detailed Description

The illustration in the drawing is schematically. It is noted that in different figures, similar or identical elements are provided with the same reference signs or with reference signs, which are different from the corresponding reference signs only within the first digit.

It is mentioned that in the following description all DC or AC signals or signal components refer to a d-q rotating reference frame. Of course, physically all electric signals being applied to the electric generator are AC signals.

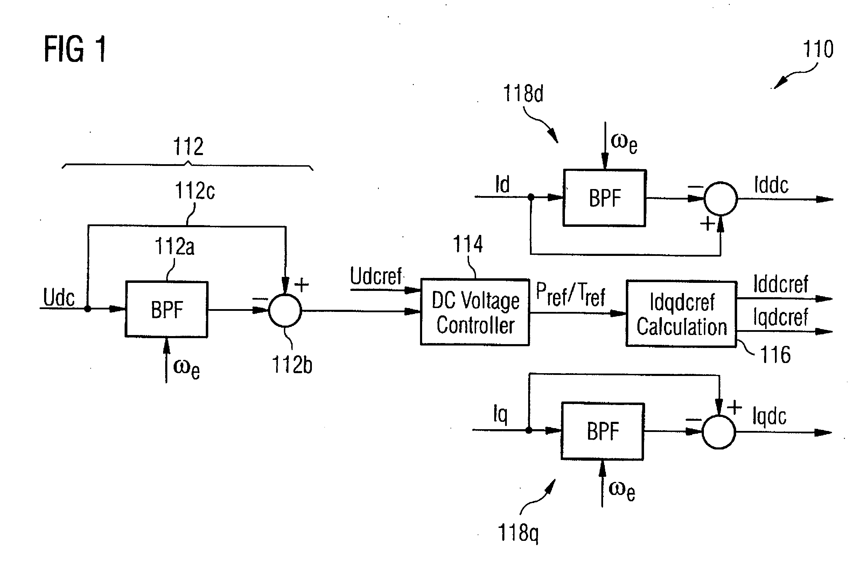

Figure 1 shows a fundamental controller 110 for controlling (a) a fundamental dc link voltage of a frequency converter and for controlling (b) the generation of a fundamental DC drive signal for electromagnetic coils of a stator of an electric generator, wherein the fundamental drive signal is associated exclusively with the fundamental operational behavior of the electric generator. The fundamental controller 110 comprises a band stop filter 112, which receives a signal Udc, which represents a measured DC link voltage of the (not depicted) frequency converter. According to the embodiment described here the band stop filter 112 is realized with an adapted band pass filter 112a being centered based on a frequency ωₑ, which is the actual fundamental electric frequency of the generator, a bypass line 112c and an adder 112b. As can be seen from the labeling of the input terminals of the adder 112b, a signal being provided by the adaptive band pass filter 112a is subtracted from the signal Udc.

It is mentioned that the band pass filter 112a can comprise center frequencies of 6 times ωₑ or 12 times ωₑ or the combination of both. It is further mentioned that the band pass filter 112a could in some application also be replaced by a high pass filter.

According to the embodiment described here the fundamental controller 110 further comprises a DC voltage controller 114, which provides in response (a) to the output from the adder 112b and (b) to a reference voltage Udcref for the DC voltage of the (not depicted) frequency converter as an output signal a generator power reference signal Pref and/or generator torque reference signal Tref. The signal Pref and/or Tref are used as an input signal for a calculation unit 116 for calculating DC current reference signals Iddcref and Iqdcref.

According to another embodiment of the invention which is not explicitly shown in the drawing, the band stop filter 112 is not necessary for the fundamental controller. Instead, the generator power reference signal Pref and/or the generator torque reference signal Tref can be directly received from a wind turbine controller, which in a known manner controls the operation of the respective wind turbine.

Further, the fundamental controller 110 further comprises two further band stop filters 118d and 118q, each of which is realized in the same manner as the band stop filter 112 by an adaptive band pass filter, a bypass line and an adder. As can be seen from Figure 1, the band stop filter 118d receives an input signal Id and the band stop filter 118q receives an input signal Iq. According to the embodiment described here Id and Iq are the actual current provided by the electric generator in a rotating d-q reference frame. As can be further seen from Figure 1, the band stop filter 118d provides a signal Iddc and the band stop filter 118q provides a signal Iqdc. The signals Iddc and Iqdc are DC drive current signal for the stator coils of the electric generator. As has already been mentioned above, the band pass filter can also be replaced by a high pass filter in some cases.

Generally speaking, in the fundamental controller 110 the feedback signal of both the measured dc link voltage Udc and the measured actual currents Id and Iq provided by the electric generator are filtered by adaptive band-stop filters 112, 118d and 118q so that the fundamental controller 110 is effectively decoupled from harmonic signals having a frequency being different from the fundamental electric frequency ωₑ of the generator.

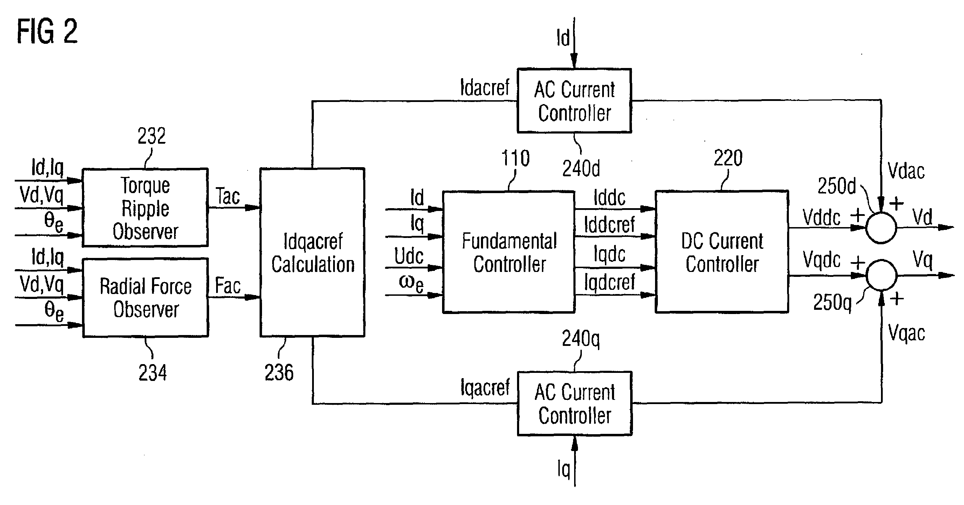

Figure 2 shows a control system 200 comprising a DC current controller 220 and two AC current controllers 240d, 240q for generating modified voltage drive signals Vd and Vq for the stator coils of an electric generator. The modified voltage drive signals 240d, 240q are configured for reducing an unwanted harmonic operational behavior of the electric generator.

As can be seen from Figure 2, the control system 200 comprises a torque ripple observation unit 232 and a radial force observation unit 234. According to the embodiment described here both the torque ripple observation unit 232 and the radial force observation unit 234 receive at least the following input signals: (a) the actual current Id and Iq provided by the electric generator, (b) the actual voltage drive signal Vd and Vq applied to the stator coils of the electric generator and (c) the actual angle θₑ between the rotating reference frame of the rotor and another reference frame (e.g. of the stator of the electric generator). In accordance with the embodiment of the invention described here the actual voltage drive signal Vd and Vq is a modified voltage drive signal, which is provided at the output of the control system 200.

It is mentioned that according to the embodiment described here the actual currents Id and Iq in the rotating d-q reference frame are calculated from measured stator currents. Further, the actual voltage drive signals Vd and Vq are not measured. They are available system variables. The actual angle θₑ between the rotating reference frame of the rotor and another reference frame can be measured and/or estimated.

The torque ripple observation unit 232 provides a torque ripple signal Tac being indicative for the actual torque ripple oscillations of the electric generator. The radial force observation unit 234 provides a radial force signal Fac being indicative for the actual radial force oscillations of the electric generator. Based on the signals Tac and Tac a calculation unit 236 calculates AC current reference signals Idacref and Iqacref, which is this document are also denominated as harmonic control signals.

As can be seen from Figure 2, the AC current reference signal Idacref is provided to the AC current controller 240d, which in consideration of the actual current Id provided by the electric generator generates an AC drive signal Vdac. Correspondingly, the AC current reference signal Iqacref is provided to the AC current controller 240q, which in consideration of the actual current Iq provided by the electric generator generates an AC drive signal Vqac. In this respect it is pointed out that the generator currents in the a-b-c reference frame is measured, then they are transformed to d-q reference frame in order to obtain Id and Iq.

The control system 200 further comprises two adders 250d and 250q. As can be seen from Figure 2, the adder 250d receives a DC drive signal Vddc from the DC current controller 220, which is added to the AC drive signal Vdac yielding the modified voltage drive signal Vd, which is fed to the stator coils of the electric generator. Correspondingly, the adder 250q receives a DC drive signal Vqdc from the DC current controller 220, which is added to the AC drive signal Vqac yielding the modified voltage drive signal Vq, which is also fed to the stator coils of the electric generator.

Descriptive speaking: Based on an on-line estimation of torque ripple and/or radial force/pressure ripples, an optimal compensation harmonic current Idacref, Iqacref in the d-q rotating frame is calculated on line. The additional AC current controller 240d, 240q for this harmonic current Idacref, Iqacref in the d-q rotating frame is added in order to ensure that the harmonic current is in fact injected to the stator coils via the modified voltage drive signal Vd, Vq.

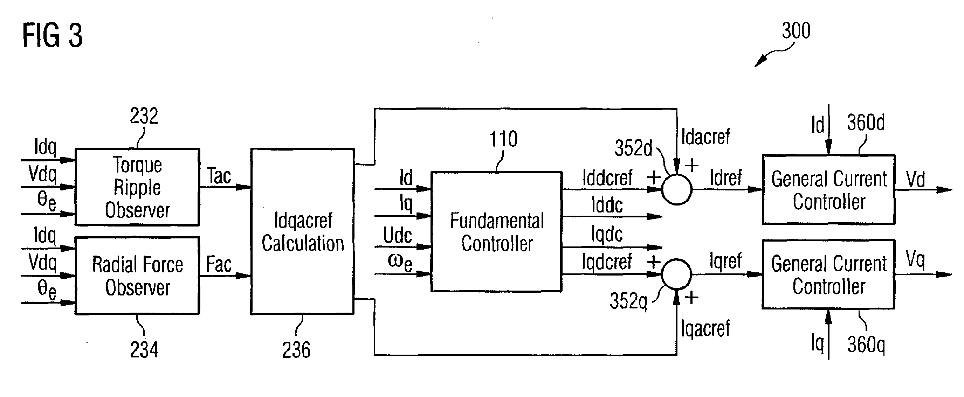

Figure 3 shows a control system 300, which differs from the control system 200 illustrated in Figure 2 in that the DC current controller 220 and the AC current controller 240d, 240q are replaced in the control system 300 by general current controllers 360d, 360q. As can be seen from Figure 3, the adding procedure is carried out on the level of the reference signals Iddcref and Iqdcref and the reference signals Idacref and Iqacref, respectively. Correspondingly, adder 352d and 352q being located upstream with respect to the general current controller 360d, 360q are used.

It is mentioned that by contrast to the control system 200 in the embodiment described here the signals Iddc and Iqdc, which are provided by the fundamental controller 100, are not used.

Descriptive speaking: In the control system 300 harmonic current reference signals Idacref, Iqacref are added together with the respective fundamental current reference signals Iddcref, Iqdcref so that a total current reference signal Idref, Iqref in the rotating d-q reference frame can be achieved. The general current controller 360d, 360q is used, in consideration of the actual current Id, Iq provided by the electric generator, to force the stator coil current to follow the total current reference signals Idref and Iqref.

At this point it is mentioned that in this document the total current reference signals Idref and Iqref are also denominated as total control signals.

It is mentioned that in the embodiments shown in Figure 2 and Figure 3, it may also be possible to use a direct sensor such as an accelerator meter, a microphone and/or a flux sensor and, if applicable an appropriate signal processing, in order to achieve the signals Tac and Fac. This means that such direct sensor(s) and, if appropriate signal processing circuits, can be used to replace the torque ripple observer 232 and/or the radial force observer 234.

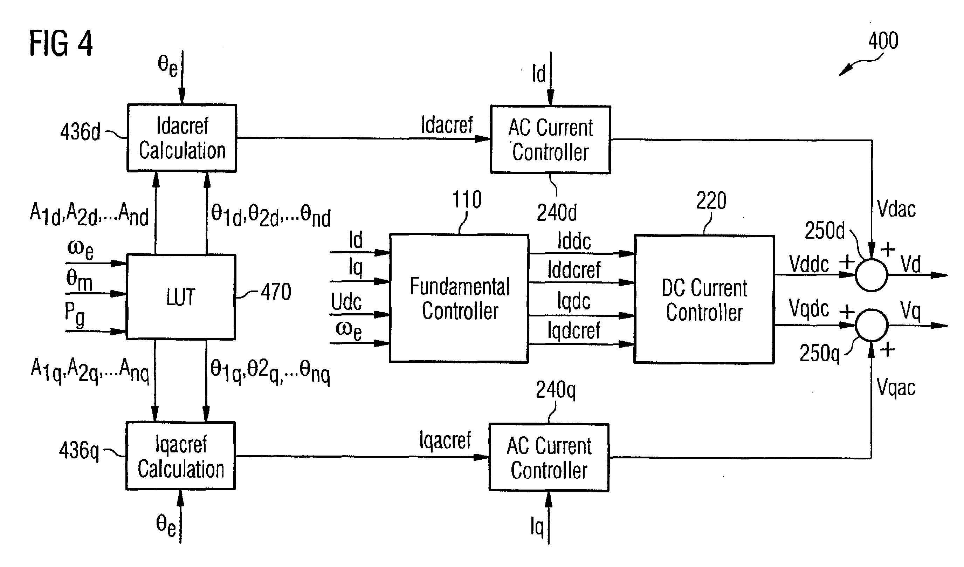

Figure 4 shows a control system comprising a DC current controller and AC current controllers for generating a modified drive signal for the stator coils of an electric generator. Compared to the control syste3m 200 illustrated in Figure 2 the torque ripple observation unit 232 and the radial force observation unit 234 are replaced by a database 470, which comprises a look up table. Further, the calculation unit 236 is split into two calculation units 436d and 436q for generating the AC current reference signals Idacref and Iqacref, respectively.

As can be seen from Figure 4, the database 470 receives as input signals the fundamental electric frequency ωₑ of the electric generator, the actual rotational angle of the rotor θₘ (rotor position) and a signal representing the actual power production Pg of the electric generator. In response to these signals θₘ, ωₑ and Pg the database 470 provides reference amplitudes A_{1d}, A_{2d}, ...A_{nd} for harmonic currents and reference phase angles θ_{1d}, θ_{2d}, ...θ_{nd} for harmonic currents to the calculation unit 436d, which in response thereto produces the AC current reference signal Idacref. Thereby, the harmonic number is denominated with 1, 2, ... , n. Correspondingly, the database 470 provides reference amplitudes A_{1q}, A_{2q}, ...A_{nq} for harmonic currents and reference phase angles θ_{1q}, θ_{2q}, ...θ_{nq} for harmonic currents to the calculation unit 436q, which in response thereto produces the AC current reference signal Iqacref.

The further processing of the AC current reference signals Idacref and Iqacref is the same as the corresponding processing within the control system 200. Therefore, for the sake of conciseness reference is made to Figure 2 and the corresponding description.

Descriptive speaking: The control system 400 is capable of generating the modified drive signals Vd and Vq. According to the embodiment described here an optimal compensation current in the d-q rotating frame is calculated off-line by means of a finite element (FE) simulation or by means of tests. The look up table scheme is used to give the optimal compensation current at different load points.

At this point it is mentioned that it may also be possible to use an on-line sweep procedure over various operational states for finding optimal values Idacref and Iqacref. In this case, noise, vibration, torque, force and/or speed of the electric generator shall be measured or estimated in order to indicate a suitable direction of the on-line sweep procedure.

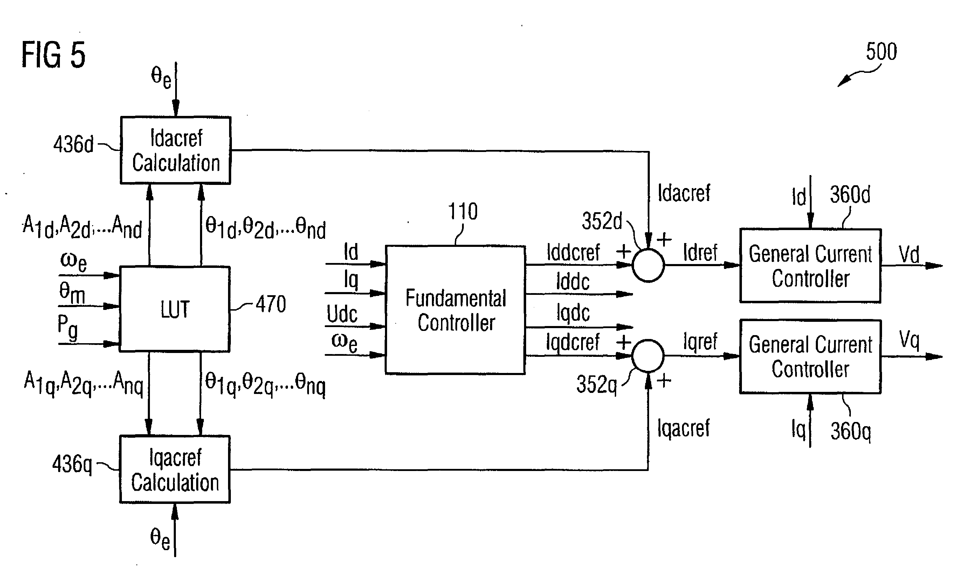

Figure 5 shows a control system 500 comprising general current controllers for generating a modified drive signal for the stator coils of an electric generator. As can be seen when considering the embodiments shown in Figures 3 and 4, the control system 500 is a rather straightforward combination of the control system 300 illustrated in Figure 3 and the control system 400 illustrated in Figure 4. Therefore, for the sake of conciseness and in order to avoid unnecessary repetitions reference is made to the description of the control system 300 and of the control system 400.

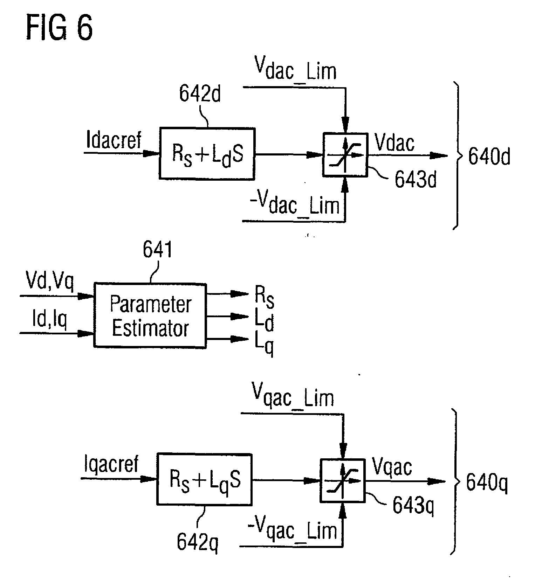

Figure 6 shows an AC current controller 640d, 640q relying on design parameters of an electric generator for generating an AC drive signal for the stator coils of the electric generator. The AC current controller 640d, 640q can be used for instance for the AC current controller illustrated in Figures 2 and 4.

The operation of the AC current controller 640d, 640q relies on design parameters of the respective electric generator, which according to the embodiment described here are determined by a parameter estimating unit 641. As can be seen from Figure 6, as a function of (a) the modified voltage drive signal Vd, Vq for the stator coils of electric generator and of (b) the actual current Id, Iq provided by the electric generator, the parameter estimating unit 641 estimates the generator design parameter Rₛ, which is the (ohmic) resistance of the stator coils, and the generator design parameters L_{d}, Lq, which are the inductances of the stator coils in the d-q rotating frame. The described on-line estimation of the generator design parameters can increase the accuracy of the AC controller 640d, 640q.

It is mentioned that the described parameter estimating unit is optional for the operation of the AC current controller 640d, 640q. There may also be other ways to provide the AC current controller 640d, 640q with the necessary values of the design parameters Rₛ and L_{d}, L_{q}.

The AC current controller 640d comprises a control unit 642d, which provides, in response to the AC current reference signal Idacref (already mentioned above) and in response to the time derivative S of the stator current and further in consideration of the design parameters Rₛ and L_{d}, an output voltage signal for driving the stator coils. In order to avoid any overdrive of the stator coils the amplitude of this output voltage signal is limited by a limiting unit 643d within a voltage range extending from -V_{dac_Lim} to + V_{dac_Lim}. The output signal from the limiting unit 643d is the AC drive signal Vdac, which has already been explained above.

Correspondingly, a control unit 642q of the AC current controller 640q provides an output voltage signal in response to the AC current reference signal Idacref (already mentioned above) and in response to the time derivative S of the stator current and further in consideration of the design parameters Rₛ and Lq. This output voltage signal is limited by a limiting unit 643q within a voltage range extending from -V_{qac_Lim} to + V_{qac_Lim}. The output signal from the limiting unit 643q is the AC drive signal Vqac.

Figure 7 shows another embodiment of an AC current controller 740d, 740q relying on a decomposition of the actual current Id, Iq (in rotating d-q reference frame) provided by the respective electric generator. The current decomposition is realized by a plurality of adaptive band pass filters 744d-1, ..., 744d-n for the d-component Id and a plurality of adaptive band pass filters 744q-1, ..., 744q-n for the q-component Iq. As can be seen from Figure 7, each adaptive band pass filter is operating in consideration of the fundamental electric frequency ωₑ of the electric generator. The output signals of each adaptive band pass filter represents the measured harmonic current for the harmonics 1, 2, ... n of the fundamental electric frequency ωₑ.

In the following the first signal processing path (for the first harmonic) of the AC current controller 740d is described. As can be seen from Figure 7, the output Idac1 of the adaptive band pass filter 744d-1 and a harmonic current reference signal Idacref1 are fed into a coordinate transformation unit 745d-1, which in response to these signals and in consideration of the actual angle θₑ between the rotating d-q reference frame and the other reference frame (x1-frame) calculates the measured harmonic current Idac1x (in the x1-frame) and the harmonic current reference signal Idacref1x (in the x1-frame). According to the embodiment described here the x1-frame defined by the matter of fact that the signals Idac1x and Idacref1x are DC signals.

The harmonic current signal Idac1x is subtracted from the harmonic current reference signal Idacref1x and the result is supplied to a current controller 746d-1, which operates in the x1-frame. According to the embodiment described here the current controller 746d-1 is a Proportional-Integral (PI) controller. However, it is mentioned that also other types of controllers can be employed.

The output signal of the current controller 746d-1 is supplied to a coordinate back transformation unit 747d-1, which in accordance with the coordinate transformation unit 745d-1 operates in consideration of the actual angle θₑ between the d-q reference frame and the x1 reference frame.

The other signal processing paths of the AC current controller 740d for the other harmonics work in the same manner. Therefore, for the sake of conciseness of this document they will not be described again. It is only mentioned that in Figure 7 the boxes of the frame regulators 749d-2 and 749d-3 for the harmonic n=2 and n=3, respectively, are used as a representation of respectively an adaptive band pass filter, a coordinate transformation unit, a subtracting unit, a current controller operating in the xn-frame and a coordinate back transformation unit.

As can be further seen from Figure 7, within the AC current controller 740d the outputs of all the signal processing paths for each processed harmonic are added by an adding unit 748d. Further, the output signal of the adding unit 748d is limited by a limiting unit 643d. The operation and the benefit of a limiting unit have already been described above with reference to Figure 6 (see limiting units 643d, 643q). The output of the limiting unit 643d is the AC drive signal Vdac, which has also already been described above.

It is mentioned that the design and the structure of the AC current controller 740q corresponds to the AC current controller 740d. Therefore, for the sake of conciseness the components and the operation of the AC current controller 740q will not be described again in detail. Reference is made to the description of the AC current controller 740d given above.

Descriptive speaking: According to a second scheme for regulating high-frequency ac current firstly, the nth harmonic component of feedback d-q current is filtered out by adaptive band pass filters 744d-1, ..., 744d-n and 744q-1, ..., 744q-n. Then, the nth AC harmonic current in the d-q reference frame is transformed into DC components in anther rotating frame xn with speed n·ωₑ. Current controllers 746d-1, ..., 746d-n and 746q-1, ..., 746q-n are used to regulate the current in this xn frame. According to the embodiment described here the current controllers 746d-1, ..., 746d-n and 746q-1, ..., 746q-n are Proportional-Integral (PI) controllers. The outputs of the current controllers 746d-1, ..., 746d-n and of the current controllers 746q-1, ..., 746q-n are transformed back to the d-q frame, are then added by adding units 748d and 748q and are then limited by the limiting units 643d and 643q, respectively. The resulting AC voltage signals Vdac and Vqac are then added to the fundamental DC component of the stator voltage (not shown in Figure 7).

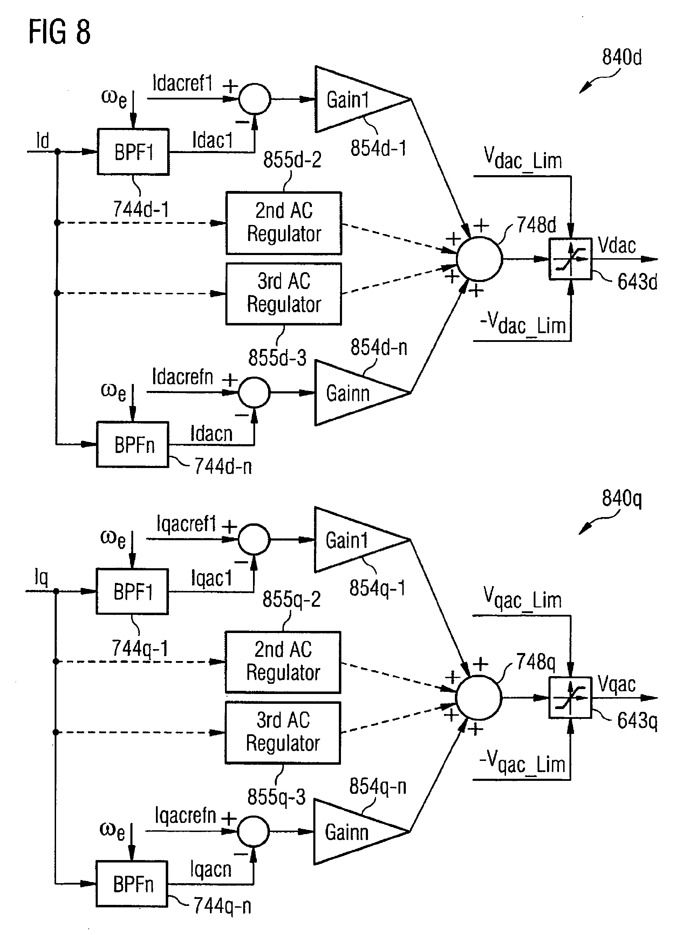

Figure 8 shows another third embodiment of an AC current controller 840d, 840q relying also on a decomposition of the current Id, Iq being actually generated by an electric generator into different harmonic current components. Again, for the frequency decomposition adaptive band pass filters 744d-1, ..., 744d-n and 744q-1, ..., 744q-n are employed.

As can be seen from Figure 8, the AC current controller 840d, 840q differs from the AC current controller 740d, 740q illustrated in Figure 7 in that the transformation into another reference frame, the processing in this other reference frame and the back transformation is replaced by an amplification, which for each processing path is carried out with a separate amplifier 854d-1, ..., 854d-n and 854q-1, ..., 854q-n. A further difference is that the subtraction between (a) the harmonic current reference signal Idacref1, ..., Idacrefn and Iqacref1, ..., Iqacrefn and (b) the measured harmonic current Idac1, ..., Idacn and Iqac1, ..., Iqacn, respectively, is carried out in the d-q reference frame immediately after the respective band pass filtering.

It is mentioned that for the shown processing paths which are assigned to the second (n=2) and to the third (n=3) harmonic of the fundamental frequency, the boxes of the AC regulators 855d-2, 855d-3 and 855q-2, 855q-3 are respectively used as a representation of an adaptive band pass filter, a subtracting unit and an amplifier ("gain2", "gain3").

It is further mentioned that apart from these differences between the operation and the processing of the AC current controller 840d, 840q is the same as the processing of the AC current controller 740d, 740q illustrated in Figure 7. Therefore, for the sake of conciseness of this document the structure and the operation of the AC current controller 840d, 840q is not described again. Instead, reference is made to the description given above.

Descriptive speaking: According to this third embodiment for regulating high-frequency AC current firstly, the nth harmonic component of feedback d-q current is filtered out by the adaptive band pass filters 744d-1, ..., 744d-n and 744q-1, ..., 744q-n. The resulting AC current components Idac1, ..., Idacn and Iqac1, ..., Iqacn are compared with an optimal AC current reference Idacref1, ..., Idacrefn and Iqacref1, ..., Iqacrefn, respectively. The difference between the respective two signals then goes through an amplifier 854d-1, ..., 854d-n or 854q-1, ..., 854q-n. The output signals of the amplifiers 854d-1, ..., 854d-n on the one hand and the output signals of the amplifiers 854q-1, ..., 854q-n on the other hand are added by the adding unit 748d and 748q, respectively. The output of the adding units 748d and 748q is limited by the limiting unit 643d or 643q, respectively, and the limited output Vdac, Vqac of the limiting unit 643d or 643q is then added to a fundamental component of the stator voltage (not shown in Figure 7). By doing the same with other processing paths, harmonic current at other orders can also be injected to the coils of the stator.

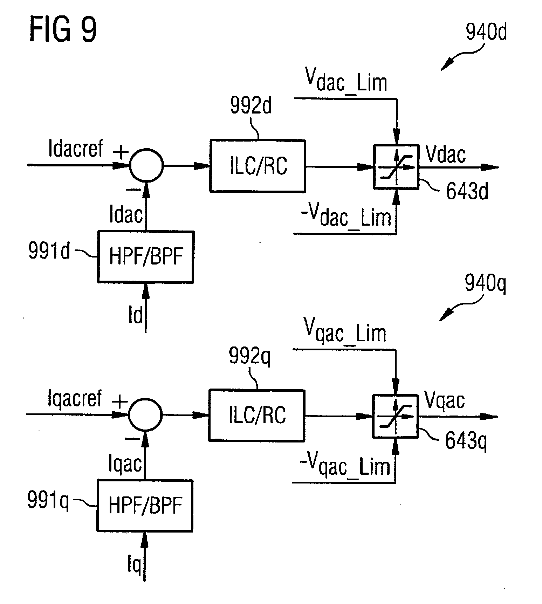

Figure 9 shows another fourth embodiment of an AC current controller 940d, 940q comprising an iterative learning controller (ILC) and/or a repetitive controller (RC) for generating an AC drive signal Vdac, Vqac for the stator coils of an electric generator.

In the following the signal processing of the AC current controller 940d for the d component of the d-q reference frame is described. As can be seen from Figure 9, the actual current Id provided by electric generator is filtered by a filter 991d, which can be either a high pass filter or band pass filter. The resulting signal Idac, which represents the measured harmonic current, is compared with (subtracted from) the AC current reference signal (harmonic control signal / harmonic current reference signal) Idacref, which has already been mentioned above. The comparison (subtraction) result is then fed to a processing unit 992d, which according to the embodiment described here comprises an iterative learning controller (ILC) and/or a repetitive controller (RC). The ILC/RC has the capability to track periodical reference signals without an accurate mathematical model. The output of the processing unit 992d is again limited (see e.g. description of the limiting units 643d and/or 643q given above).

Again, the structure and the operation of the AC current controller 940q for the q component of the d-q reference frame corresponds to the structure and the operation of the AC current controller 940d. In order to avoid unnecessary repetitions reference is made to the description of the AC current controller 940d presented above.

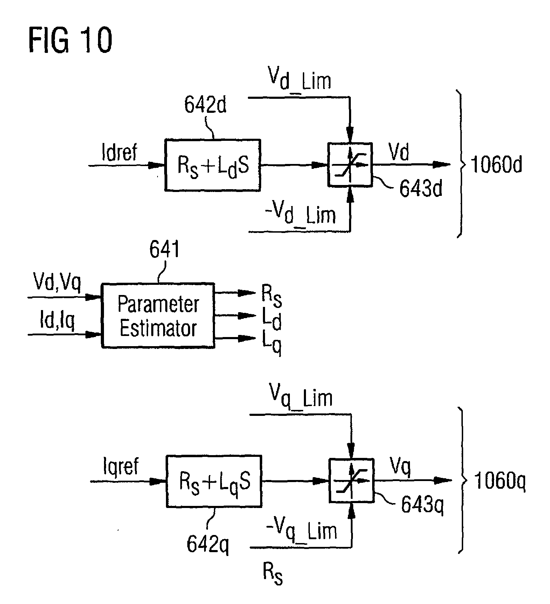

Figure 10 shows a general current controller 1060d, 1060q relying on the design parameter Rₛ and L_{d}, Lq of the respective electric generator. The general current controller 1060d, 1060q can be used for instance in the control systems 300 (illustrated in Figure 3) and 500 (illustrated in Figure 5).

The output signals of the general current controller 1060d, 1060q are the modified drive signals Vd and Vq, respectively, for driving the stator coils of the electric generator. The structure of the general current controller 1060d, 1060q is the same as the structure of the AC current controller 640d, 640q illustrated in Figure 6. The only difference is the type of the input signals being employed. Specifically, the general current controller 1060d, 1060q uses the above described total current reference signals / total control signals Idref and Iqref as input signals. Due to the strong similarities between the general current controller 1060d, 1060q and the AC current controller 640d, 640q illustrated in Figure 6 (same structure, only different input signals) and for the sake of conciseness of this document no further details are presented here. Instead, reference is made to the above presented description of the AC current controller 640d, 640q.

Descriptive speaking: The general current controller 1060d, 1060q uses the generator design parameters Rₛ and L_{d}, Lq in order to calculate the total voltage that is needed to generate corresponding current in the d-q reference frame. An on-line estimation of generator design parameters Rₛ and L_{d}, Lq can increase the accuracy of the controller.

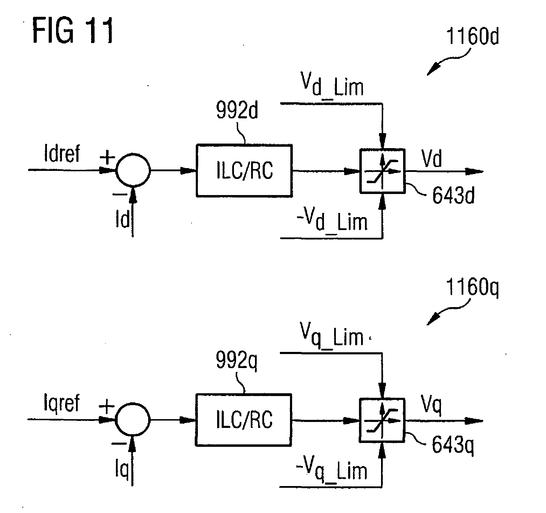

Figure 11 shows another embodiment of a general current controller 1160d, 1160q, which can be used for instance in the above described control systems 300 and 500. The general current controller 1160d, 1160q, which comprises a data processing unit 992d, 992q, yield the modified voltage drive signal Vd, Vq for the stator coils of the electric generator.

In the following the signal processing of the general current controller 1160d for the d component of the d-q reference frame is described. As can be seen from Figure 11, the actual current Id provided by the respective electric generator is subtracted from the above described total control signal /total current reference signal Idref. The result of subtraction is then supplied to the processing unit 992d, which according to the embodiment described here comprises an iterative learning controller (ILC) and/or a repetitive controller (RC). The ILC/RC has the capability to track periodical reference signals without an accurate mathematical model. The output of the processing unit 992d is again limited (see e.g. description of the limiting units 643d and/or 643q given above). The limited output signal is the modified voltage drive signal Vd, Vq for stator coils of the electric generator.

The structure and the operation of the general current controller 1160q for the q component of the d-q reference frame corresponds to the structure and the operation of the general current controller 1160d. In order to avoid unnecessary repetitions reference is made to the description of the general current controller 1160d presented above.

Descriptive speaking: The general current controller 1160d, 1160q compares within the d-q reference frame the sampled current Id, Iq with the total current reference signal Idref, Iqref. The result of comparison goes through an iterative learning controller (ILC) and/or a repetitive controller (RC) being provided by the processing unit 992d, 992q. The ILC/RC has the capability to track periodical reference without requiring an accurate model. It is mentioned that in steady state the error between the real current and the current reference within the d-q reference frame is "zero" even though the reference is a combination of fundamental component and harmonic components.

The above elucidated embodiments of the invention presented in this document may in particular provide the following advantages:
(A) Acoustic noise and vibrations of an electromechanical transducer can be significantly reduced.
(B) Torque ripples in particular of an output of an electric generator can be minimized.
(C) Radial force/pressure ripple of an electromechanical transducer can be minimized.
(D) An implementation of the invention into actual available electromechanical transducers can be realized by means of software. Therefore, there are no or only a negligible additional costs for realizing the invention in connection with available electromechanical transducers.
(E) Due to typically comparatively small amplitudes of harmonic currents an implementation of the invention has very low additional energy losses.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A method for controlling the operation of an electromechanical transducer, in particular an electric generator for a wind turbine, the method comprising
determining a harmonic control signal (Idacref, Iqacref) being indicative for a harmonic operational behavior of the electromechanical transducer, wherein the harmonic operational behavior is given by electric and/or mechanic oscillations having frequency components being different from a fundamental frequency, which is assigned to a fundamental operational behavior of the electromechanical transducer, wherein determining the harmonic control signal (Idacref, Iqacref) comprises
observing at least one value of operational parameters (θₘ, ωₑ, P_{g}) of the electromechanical transducer and
deriving from a database the harmonic control signal (Idacref, Iqacref) as a function of the observed values of the operational parameters (θₘ, ωₑ, Pg) of the electromechanical transducer, wherein the operational parameters comprise a power (P_{g}) being actually generated by the electromechanical transducer or being actually consumed by the electromechanical transducer,
generating a modified drive signal (Vd, Vq) based on the determined harmonic control signal (Idacref, Iqacref), and
supplying the generated modified drive signal (Vd, Vq) to electromagnetic coils of a stator of the electromechanical transducer.

2. The method as set forth in the preceding claim, wherein the harmonic operational behavior is based on
torque ripple oscillations and/or
radial force/pressure ripple oscillations.

3. The method as set forth in any one of the preceding claims, wherein
generating a modified drive signal (Vd, Vq) comprises
adding an AC drive signal (Vdac, Vqac) being associated with the harmonic operational behavior of the electromechanical transducer to a DC drive signal (Vddc, Vqdc) being associated with the fundamental operational behavior of the electromechanical transducer.

4. The method as set forth in the preceding claim, wherein the DC drive signal (Vddc, Vqdc) is generated by a DC controller (220), which is driven by a fundamental controller (110) for controlling a fundamental drive signal for the electromagnetic coils of the stator, wherein the fundamental drive signal is associated exclusively with the fundamental operational behavior of the electromechanical transducer and the AC drive signal (Vdac, Vqac) is generated by an AC controller (240d, 240q), which is operated as a function of the determined harmonic control signal (Idacref, Iqacref) being indicative for the harmonic operational behavior of the electromechanical transducer.

5. The method as set forth in any one of the preceding claims 3 and 4, wherein
the AC drive signal (Vdac, Vqac) is determined by
decomposing a current (Id, Iq) being actually generated by the electromechanical transducer or being actually consumed by the electromechanical transducer into different harmonic current components (Idac1, Idacn, Iqac1, Iqacn),
transforming each harmonic current component (Idac1, Idacn, Iqac1, Iqacn) of the current (Id, Iq) from a rotating reference frame of the rotor of the electromechanical transducer into a harmonic voltage component of another reference frame,
regulating each transformed harmonic voltage component within the another reference frame,
transforming back each regulated harmonic voltage component from the another reference frame into the rotating reference frame, and
adding the various transformed back regulated harmonic voltage components.

6. The method as set forth in any one of the preceding claims 3 and 4, wherein
the AC drive signal (Vdac, Vqac) is determined by
decomposing a current (Id, Iq) being actually generated by the electromechanical transducer or being actually consumed by the electromechanical transducer into different harmonic current components (Idac1, Idacn, Iqac1, Iqacn),
converting each harmonic current component (Idac1, Idacn, Iqac1, Iqacn) into a harmonic voltage component,
amplifying each converted harmonic current component, and
adding the various amplified converted harmonic voltage components.

7. The method as set forth in any one of the preceding claims 1 to 2, wherein
the modified drive signal (Vd, Vq) is generated by a general control unit (360d, 360q) as a function of
(a) the determined harmonic control signal (Idacref, Iqacref) and
(b) a fundamental control signal (Iddcref, Iqdcref) being generated by a fundamental controller (110) for controlling a fundamental drive signal for the electromagnetic coils of the stator, wherein the fundamental drive signal is associated exclusively with the fundamental operational behavior of the electromechanical transducer.

8. The method as set forth in the preceding claim, wherein the modified drive signal (Vd, Vq) is generated as a further function of a current (Id, Iq) being actually generated by the electromechanical transducer or being actually consumed by the electromechanical transducer.

9. The method as set forth in any one of the preceding claims, wherein
determining the harmonic control signal (Idacref, Iqacref) comprises
observing a strength of the harmonic operational behavior and
calculating the harmonic control signal (Idacref, Iqacref) in response to the observed strength of the harmonic operational behavior.

10. The method as set forth in the preceding claim, wherein observing the strength of the harmonic operational behavior comprises
using at least one of a measurement value (θₑ) and an available system value (Id, Iq, Vd, Vq) of observables being indicative for torque ripple oscillations and/or for radial force/pressure ripple oscillations of the electromechanical transducer.

11. The method as set forth in any one of the preceding claims, wherein
the operational parameters being observed further comprise at least one of
- a frequency (ωₑ) of an AC signal being actually generated by the electromechanical transducer or being actually consumed by the electromechanical transducer, and
- an actual rotational angle of the rotor of the electromechanical transducer.

12. The method as set forth in any one of the preceding claims, wherein
the modified drive signal (Vd, Vq) is generated as a function of electric design parameters (Rₛ, L_{d}, Lq) of the electromechanical transducer.

13. A control system for controlling the operation of an electromechanical transducer, in particular an electric generator for a wind turbine, the control system (200, 300, 400, 500) comprising
a determining unit (236, 436d, 436q) for determining a harmonic control signal (Idacref, Iqacref) being indicative for a harmonic operational behavior of the electromechanical transducer, wherein the harmonic operational behavior is given by electric and/or mechanic oscillations having frequency components being different from a fundamental frequency, which is assigned to a fundamental operational behavior of the electromechanical transducer, wherein determining the harmonic control signal (Idacref, Iqacref) comprises
observing at least one value of operational parameters (θₘ, ωₑ, P_{g}) of the electromechanical transducer and
deriving from a database the harmonic control signal (Idacref, Iqacref) as a function of the observed values of the operational parameters (θₘ, ωₑ, Pg) of the electromechanical transducer, wherein the operational parameters comprise a power (Pg) being actually generated by the electromechanical transducer or being actually consumed by the electromechanical transducer,
a generating unit (220, 240d, 240q, 250d, 250q, 360d, 360q) for generating a modified drive signal (Vd, Vq) based on the determined harmonic control signal (Idacref, Iqacref), and
a supplying unit for supplying the generated modified drive signal (Vd, Vq) to electromagnetic coils of a stator of the electromechanical transducer.

14. A computer program for controlling the operation of an electromechanical transducer, in particular an electric generator for a wind turbine, the computer program, when being executed by a data processor, is adapted for controlling and/or for carrying out the method as set forth in any one of the claims 1 to 12.

## Patentansprüche

1. Verfahren zum Steuern des Betriebs eines elektromechanischen Wandlers, insbesondere eines Stromgenerators für eine Windenergieanlage, welches Folgendes umfasst:
Ermitteln eines harmonischen Steuersignals (Idacref, Iqacref), das ein harmonisches Betriebsverhalten des elektromechanischen Wandlers anzeigt, wobei das harmonische Betriebsverhalten durch elektrische und/ oder mechanische Schwingungen mit Frequenzkomponenten gegeben ist, welche sich von einer Grundfrequenz unterscheiden, die einem Grundbetriebsverhalten des elektromechanischen Wandlers zugeordnet ist, wobei das Ermitteln des harmonischen Steuersignals (Idacref, Iqacref) Folgendes umfasst:
Beobachten mindestens eines Wertes von Betriebsparametern (θₘ, ωₑ, Pg) des elektromechanischen Wandlers und
Ableiten des harmonischen Steuersignals (Idacref, Iqacref) aus einer Datenbank in Abhängigkeit von den beobachteten Werten der Betriebsparameter (θₘ, ωₑ, Pg) des elektromechanischen Wandlers, wobei die Betriebsparameter eine Leistung (Pg) umfassen, die tatsächlich von dem elektromechanischen Wandler erzeugt oder tatsächlich von ihm aufgenommen wird, Erzeugen eines modifizierten Antriebssignals (Vd, Vq) auf der Grundlage des ermittelten harmonischen Steuersignals (Idacref, Iqacref) und Einspeisen des erzeugten modifizierten Antriebssignals (Vd, Vq) in elektromagnetische Wicklungen eines Stators des elektromechanischen Wandlers.

2. Verfahren nach dem vorhergehenden Anspruch, bei dem
das harmonische Grundverhalten auf
Drehmomentwelligkeitsschwingungen und/ oder
Radialkraft-/ Druckwelligkeitsschwingungen beruht.

3. Verfahren nach einem der vorhergehenden Ansprüche, bei dem
das Erzeugen eines modifizierten Antriebssignals (Vd, Vq) Folgendes umfasst:
Hinzufügen eines Wechselstromantriebssignals (Vdac, Vqac), das zu dem harmonischen Betriebsverhalten des elektromechanischen Wandlers gehört, zu einem Gleichstromantriebssignal (Vddc, Vqdc), das zu dem Grundbetriebsverhalten des elektromechanischen Wandlers gehört.

4. Verfahren nach dem vorhergehenden Anspruch, bei dem
das Gleichstromantriebssignal (Vddc, Vqdc) von einem Gleichstromregler (220) erzeugt wird, der von einem Grundregler (110) zum Regeln eines Grundantriebssignals für die elektromagnetischen Wicklungen des Stators angetrieben wird, wobei das Grundantriebssignal ausschließlich zum Grundbetriebsverhalten des elektromechanischen Wandlers gehört und das Wechselstromantriebssignal (Vdac, Vqac) von einem Wechselstromregler (240d, 240q) erzeugt wird, der in Abhängigkeit von dem ermittelten harmonischen Steuersignal (Idacref, Iqacref) betrieben wird, welches das harmonische Betriebsverhalten des elektromechanischen Wandlers anzeigt.

5. Verfahren nach einem der vorhergehenden Ansprüche 3 und 4, bei dem
das Wechselstromantriebssignal (Vdac, Vqac) ermittelt wird durch:
Zerlegen eines Stroms (Id, Iq), der tatsächlich von dem elektromechanischen Wandler erzeugt oder tatsächlich von ihm aufgenommen wird, in verschiedene harmonische Stromkomponenten (Idac1, Idacn, Iqac1, Iqacn),
Transformieren jeder harmonischen Stromkomponente (Idac1, Idacn, Iqac1, Iqacn) des Stroms (Id, Iq) aus einem rotierenden Bezugsrahmen des Rotors des elektromechanischen Wandlers in eine harmonische Spannungskomponente eines anderen Bezugsrahmens,
Regeln jeder transformierten harmonischen Spannungskomponente in dem anderen Bezugsrahmen,
Rücktransformieren jeder geregelten harmonischen Spannungskomponente aus dem anderen Bezugsrahmen in den rotierenden Bezugsrahmen und
Hinzufügen der verschiedenen rücktransformierten, geregelten harmonischen Spannungskomponenten.

6. Verfahren nach einem der vorhergehenden Ansprüche 3 und 4, bei dem
das Wechselstromantriebssignal (Vdac, Vqac) ermittelt wird durch:
Zerlegen eines Stroms (Id, Iq), der tatsächlich von dem elektromechanischen Wandler erzeugt oder tatsächlich von ihm aufgenommen wird, in verschiedene harmonische Stromkomponenten (Idac1, Idacn, Iqac1, Iqacn),
Umwandeln jeder harmonischen Stromkomponente (Idac1, Idacn, Iqac1, Iqacn) in eine harmonische Spannungskomponente,
Verstärken jeder umgewandelten harmonischen Stromkomponente und
Hinzufügen der verschiedenen verstärkten, umgewandelten harmonischen Spannungskomponenten.

7. Verfahren nach einem der vorhergehenden Ansprüche 1 und 2, bei dem
das modifizierte Antriebssignal (Vd, Vq) von einer allgemeinen Steuereinheit (360d, 360q) in Abhängigkeit von
(a) dem ermittelten harmonischen Steuersignal (Idacref, Iqacref) und
(b) einem Grundsteuersignal (Iddcref, Idqref) erzeugt wird, das von einem Grundregler (110) zum Regeln eines Grundantriebssignals für die elektromagnetischen Wicklungen des Stators erzeugt wird, wobei das Grundantriebssignal ausschließlich zum Grundbetriebsverhalten des elektromechanischen Wandlers gehört.

8. Verfahren nach dem vorhergehenden Anspruch, bei dem
das modifizierte Antriebssignal (Vd, Vq) weiterhin in Abhängigkeit von einem Strom (Id, Iq) erzeugt wird, der tatsächlich von dem elektromechanischen Wandler erzeugt oder tatsächlich von ihm aufgenommen wird.

9. Verfahren nach einem der vorhergehenden Ansprüche, bei dem
das Ermitteln des harmonischen Steuersignals (Idacref, Iqacref) Folgendes umfasst:
Beobachten einer Ausprägung des harmonischen Betriebsverhaltens und
Berechnen des harmonischen Steuersignals (Idacref, Iqacref) als Reaktion auf die beobachtete Stärke des harmonischen Betriebsverhaltens.

10. Verfahren nach dem vorhergehenden Anspruch, bei dem
das Beobachten der Stärke des harmonischen Betriebsverhaltens Folgendes umfasst:
Benutzen eines Messwerts (θₑ) oder/ und eines verfügbaren Systemwerts (Id, Iq, Vd, Vq) von Observablen, die Drehmomentwelligkeits- und/ oder Radialkraft-/Druckwelligkeitsschwingungen des elektromechanischen Wandlers anzeigen.

11. Verfahren nach einem der vorhergehenden Ansprüche, bei dem die beobachteten Betriebsparameter ferner mindestens einen der folgenden umfassen:
- eine Frequenz (ωₑ) eines Wechselstromsignals, das tatsächlich von dem elektromechanischen Wandler erzeugt oder tatsächlich von ihm aufgenommen wird, und
- einen tatsächlichen Rotationswinkel des Rotors des elektromechanischen Wandlers.

12. Verfahren nach einem der vorhergehenden Ansprüche, bei dem
das modifizierte Antriebssignal (Vd, Vq) in Abhängigkeit von elektrischen Auslegungsparametern (Rₛ, L_{d}, Lq) des elektromechanischen Wandlers erzeugt wird.

13. Steuersystem zum Steuern des Betriebs eines elektromechanischen Wandlers, insbesondere eines Stromgenerators für eine Windenergieanlage, wobei das Steuersystem (200, 300, 400, 500) Folgendes umfasst:
eine Ermittlungseinheit (236, 436d, 436q) zum Ermitteln eines harmonischen Steuersignals (Idacref, Iqacref), das ein harmonisches Betriebsverhalten des elektromechanischen Wandlers anzeigt, wobei das harmonische Betriebsverhalten durch elektrische und/ oder mechanische Schwingungen mit Frequenzkomponenten gegeben ist, welche sich von einer Grundfrequenz unterscheiden, die einem Grundbetriebsverhalten des elektromechanischen Wandlers zugeordnet ist, wobei das Ermitteln des harmonischen Steuersignals (Idacref, Iqacref) Folgendes umfasst:
Beobachten mindestens eines Wertes von Betriebsparametern (θₘ, ωₑ, Pg) des elektromechanischen Wandlers und
Ableiten des harmonischen Steuersignals (Idacref, Iqacref) aus einer Datenbank in Abhängigkeit von den beobachteten Werten der Betriebsparameter (θₘ, ωₑ, Pg) des elektromechanischen Wandlers, wobei die Betriebsparameter eine Leistung (Pg) umfassen, die tatsächlich von dem elektromechanischen Wandler erzeugt oder tatsächlich von ihm aufgenommen wird,
eine Erzeugungseinheit (220, 240d, 240q, 250d, 250q, 360d, 360q) zum Erzeugen eines modifizierten Antriebssignals (Vd, Vq) auf der Grundlage des ermittelten harmonischen Steuersignals (Idacref, Iqacref) und
eine Einspeiseeinheit zum Einspeisen des erzeugten modifizierten Antriebssignals (Vd, Vq) in elektromagnetische Wicklungen eines Stators des elektromechanischen Wandlers.

14. Computerprogramm zum Steuern des Betriebs eines elektromechanischen Wandlers, insbesondere eines Stromgenerators für eine Windenergieanlage, wobei das Computerprogramm, wenn es von einem Datenprozessor ausgeführt wird, für das Steuern und/ oder Ausführen des Verfahrens nach einem der Ansprüche 1 bis 12 ausgelegt ist.

## Revendications

1. Procédé de commande du fonctionnement d'un transducteur électromécanique, en particulier un générateur électrique pour une éolienne, le procédé comprenant
la détermination d'un signal de commande harmonique (Idacref, Iqacref) étant indicateur d'un comportement opérationnel harmonique du transducteur électromécanique, dans lequel le comportement opérationnel harmonique est donné par des oscillations électriques et/ou mécaniques ayant des composantes de fréquence étant différentes par rapport à une fréquence fondamentale, qui est attribuée à un comportement opérationnel fondamental du transducteur électromécanique, dans lequel la détermination du signal de commande harmonique (Idacref, Iqacref) comprend
l'observation d'au moins une valeur de paramètres opérationnels (θₘ, ωₑ, Pg) du transducteur électromécanique et
l'obtention à partir d'une base de données du signal de commande harmonique (Idacref, Iqacref) comme une fonction des valeurs observées des paramètres opérationnels (θₘ, ωₑ, P_{g}) du transducteur électromécanique, dans lequel les paramètres opérationnels comprennent une puissance (Pg) étant réellement générée par le transducteur électromécanique ou étant réellement consommée par le transducteur électromécanique, générant un signal de pilotage modifié (Vd, Vq) sur la base du signal de commande harmonique (Idacref, Iqacref) déterminé, et
la délivrance du signal de pilotage modifié (Vd, Vq) généré à des bobines électromagnétiques d'un stator du transducteur électromécanique.

2. Procédé selon la revendication précédente, dans lequel le comportement opérationnel harmonique est basé sur
des oscillations d'ondulation de couple et/ou des oscillations d'ondulation de force/pression radiale.

3. Procédé selon l'une quelconque des revendications précédentes, dans lequel
la génération d'un signal de pilotage modifié (Vd, Vq) comprend
l'ajout d'un signal de pilotage CA (Vdac, Vqac) étant associé avec le comportement opérationnel harmonique du transducteur électromécanique à un signal de pilotage CC (Vddc, Vqdc) étant associé avec le comportement opérationnel fondamental du transducteur électromécanique.

4. Procédé selon la revendication précédente, dans lequel le signal de pilotage CC (Vddc, Vqdc) est généré par un contrôleur CC (220), qui est piloté par un contrôleur fondamental (110) pour commander un signal de pilotage fondamental pour les bobines électromagnétiques du stator, dans lequel le signal de pilotage fondamental est associé exclusivement avec le comportement opérationnel fondamental du transducteur électromécanique et le signal de pilotage CA (Vdac, Vqac) est généré par un contrôleur CA (240d, 240q), qui est opéré comme une fonction du signal de commande harmonique (Idacref, Iqacref) déterminé étant indicateur du comportement opérationnel harmonique du transducteur électromécanique.

5. Procédé selon l'une quelconque des revendications précédentes 3 et 4, dans lequel
le signal de pilotage CA (Vdac, Vqac) est déterminé par
la décomposition d'un courant (Id, Iq) étant réellement généré par le transducteur électromécanique ou étant réellement consommé par le transducteur électromécanique en différentes composantes harmoniques de courant (Idac1, Idacn, Iqac1, Iqacn),
la transformation de chaque composante harmonique de courant (Idac1, Idacn, Iqac1, Iqacn) du courant (Id, Iq) à partir d'un cadre de référence de rotation du rotor du transducteur électromécanique en une composante harmonique de tension d'un autre cadre de référence,
la régulation de chaque composante harmonique de tension transformée à l'intérieur de l'autre cadre de référence,
la transformation en arrière de chaque composante harmonique de tension régulée de l'autre cadre de référence dans le cadre de référence de rotation, et
l'addition des diverses composantes harmoniques de tension régulées transformées en arrière.

6. Procédé selon l'une quelconque des revendications précédentes 3 et 4, dans lequel
le signal de pilotage CA (Vdac, Vqac) est déterminé par
la décomposition d'un courant (Id, Iq) étant réellement généré par le transducteur électromécanique ou étant réellement consommé par le transducteur électromécanique en différentes composantes harmoniques de courant (Idac1, Idacn, Iqac1, Iqacn),
la conversion de chaque composante harmonique de courant (Idac1, Idacn, Iqac1, Iqacn) en une composante harmonique de tension,
l'amplification de chaque composante harmonique de courant convertie, et
l'addition des diverses composantes harmoniques de tension converties amplifiées.

7. Procédé selon l'une quelconque des revendications précédentes 1 à 2, dans lequel
le signal de pilotage modifié (Vd, Vq) est généré par une unité de commande générale (360d, 360q) comme une fonction de
(a) le signal de commande harmonique (Idacref, Iqacref) déterminé et
(b) un signal de commande fondamental (Iddcref, Iqdcref) étant généré par un contrôleur fondamental (110) pour commander un signal de pilotage fondamental pour les bobines électromagnétiques du stator, dans lequel le signal de pilotage fondamental est associé exclusivement avec le comportement opérationnel fondamental du transducteur électromécanique.

8. Procédé selon la revendication précédente, dans lequel le signal de pilotage modifié (Vd, Vq) est généré comme une autre fonction d'un courant (Id, Iq) étant réellement généré par le transducteur électromécanique ou étant réellement consommé par le transducteur électromécanique.

9. Procédé selon l'une quelconque des revendications précédentes, dans lequel
la détermination du signal de commande harmonique (Idacref, Iqacref) comprend
l'observation d'une force du comportement opérationnel harmonique et
le calcul du signal de commande harmonique (Idacref, Iqacref) en réponse à la force observée du comportement opérationnel harmonique.

10. Procédé selon la revendication précédente, dans lequel l'observation de la force du comportement opérationnel harmonique comprend
l'utilisation d'au moins une parmi une valeur de mesure (θₑ) et une valeur de système disponible (Id, Iq, Vd, Vq) de paramètres observables étant indicateurs d'oscillations d'ondulation de couple et/ou d'oscillations d'ondulation de force/pression radiale du transducteur électromécanique.

11. Procédé selon l'une quelconque des revendications précédentes, dans lequel
les paramètres opérationnels étant observés comprennent en outre au moins un parmi
- une fréquence (ωₑ) d'un signal CA étant réellement généré par le transducteur électromécanique ou étant réellement consommé par le transducteur électromécanique, et
- un angle de rotation réel du rotor du transducteur électromécanique.

12. Procédé selon l'une quelconque des revendications précédentes, dans lequel
le signal de pilotage modifié (Vd, Vq) est généré comme une fonction de paramètres électriques de conception (Rₛ, L_{d}, Lq) du transducteur électromécanique.

13. Système de commande pour commander le fonctionnement d'un transducteur électromécanique, en particulier un générateur électrique pour une éolienne, le système de commande (200, 300, 400, 500) comprenant
une unité de détermination (236, 436d, 436q) pour déterminer un signal de commande harmonique (Idacref, Iqacref) étant indicateur d'un comportement opérationnel harmonique du transducteur électromécanique, dans lequel le comportement opérationnel harmonique est donné par des oscillations électriques et/ou mécaniques ayant des composantes de fréquence étant différentes par rapport à une fréquence fondamentale, qui est attribuée à un comportement opérationnel fondamental du transducteur électromécanique, dans lequel la détermination du signal de commande harmonique (Idacref, Iqacref) comprend
l'observation d'au moins une valeur de paramètres opérationnels (θₘ, ωₑ, Pg) du transducteur électromécanique et
l'obtention à partir d'une base de données du signal de commande harmonique (Idacref, Iqacref) comme une fonction des valeurs observées des paramètres opérationnels (θₘ, ωₑ, P_{g}) du transducteur électromécanique, dans lequel les paramètres opérationnels comprennent une puissance (Pg) étant réellement générée par le transducteur électromécanique ou étant réellement consommée par le transducteur électromécanique,
une unité de génération (220, 240d, 240q, 250d, 250q, 360d, 360q) pour générer un signal de pilotage modifié (Vd, Vq) sur la base du signal de commande harmonique (Idacref, Iqacref) déterminé, et
une unité de délivrance pour délivrer le signal de pilotage modifié (Vd, Vq) généré à des bobines électromagnétiques d'un stator du transducteur électromécanique.

14. Programme informatique pour commander le fonctionnement d'un transducteur électromécanique, en particulier un générateur électrique pour une éolienne, le programme informatique, lorsqu'il est exécuté par un processeur de données, est adapté à commander et/ou à mettre en oeuvre le procédé selon l'une quelconque des revendications 1 à 12.
